## Europäisches Patentamt

## European Patent Office

## Office européen des brevets

(19)

(11) Veröffentlichungsnummer : **0 211 848**
**B1**

(12) **EUROPÄISCHE PATENTSCHRIFT**

(45) Veröffentlichungstag der Patentschrift :
15.03.89

(21) Anmeldenummer : 86900058.8

(22) Anmeldetag : 14.12.85

(86) Internationale Anmeldenummer :
PCT/DE 85/00524

(87) Internationale Veröffentlichungsnummer :
WO/8604531 (14.08.86 Gazette 86/18)

(51) Int. Cl.⁴ : **B 23 D 79/00**, B 23 K   7/06

(54) ANLAGE ZUR BEHANDLUNG VON WERKSTÜCKEN MIT EINEM EXPLOSIVEN GASGEMISCH, INSBESONDERE THERMISCHE ENTGRATANLAGE.

(30) Priorität : 09.02.85 DE 3504447

(43) Veröffentlichungstag der Anmeldung :
04.03.87 Patentblatt 87/10

(45) Bekanntmachung des Hinweises auf die Patenterteilung : 15.03.89 Patentblatt 89/11

(84) Benannte Vertragsstaaten :
AT CH DE FR GB IT LI

(56) Entgegenhaltungen :
WO--A--84 /042 66
CH--A--   90 565
DE--C--   968 145
GB--A--   704 198
US--A-- 1 660 424

(73) Patentinhaber : ROBERT BOSCH GMBH
Postfach 50
D-7000 Stuttgart 1 (DE)

(72) Erfinder : CONRAD, Hans-Jürgen
Lessingstr. 25
D-7255 Rutesheim (DE)
Erfinder : KURZ, Hanns
Kernerstr. 29
D-7000 Stuttgart 1 (DE)
Erfinder : SAUTER, Roland
Maierkopfstr. 27
D-7000 Stuttgart 31 (DE)
Erfinder : SCHULTE, Winfried
Ludwigsburger Str. 20
D-7014 Kornwestheim (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einer Anlage nach der Gattung des Patentanspruchs 1, wie aus der WO-A-84/04266 bekannt. Bei den besonders in Bezug genommenen Anlagen zum thermischen Entgraten werden die zu entgratenden Werkstücke in den Brennraum einer Bearbeitungskammer eingebracht. Nach Verschließen der Kammer wird in den Brennraum eine zündfähige Mischung aus Brenngas und Sauerstoff eingeleitet. Die Vermischung der Gaskomponenten erfolgt in einem an die Bearbeitungskammer angeflanschten Mischblock. Zur Einleitung der Gaskomponenten dient ein Gaszuführkanal, der bei bekannten Anlagen unmittelbar in den Brennraum mündet. Dieser Kanal ist in der Regel als eine den Kopfteil der Bearbeitungskammer durchquerende Bohrung mit einem Durchmesser von wenigen Millimetern ausgebildet. Das Gasgemisch wird durch eine im Mischblock befindliche Zündkerze gezündet. Die Flammfront schreitet von der Zündstelle im Zündkanal des Mischblocks über den Gaszuführkanal in den Brennraum fort und entzündet das in ihm befindliche Gasgemisch. Der Vorgang läuft innerhalb weniger Millisekunden ab. Durch die freiwerdende Wärme treten im Brennraum Temperaturen von ca 3 500 °C auf. Kurz nach dem Zünden des Gasgemisches entstehen im Brennraum aufgrund der Explosion Drücke in der Größenordnung von 1 000 bar.

Die ordnungsgemäße Zündung und Verbrennung des Gasgemisches hängt u. a. von einer guten, gleichmäßigen Durchmischung der Gaskomponenten im Bereich der Zündstelle, im Gaszuführkanal und im Brennraum sowie davon ab, daß der aus der Mündung des Gaszuführkanals austretende Flammstrahl ein möglichst großes Volumen des im Brennraum befindlichen Gasgemisches erfaßt. Bei den bekannten Anlagen erfolgt die Vermischung der Gaskomponeten im Mischblock, während der Gaszuführkanal und der Brennraum zur Gemischaufbereitung wenig beitragen. Der aus der Mündung des Gaszuführkanals austretende, eng gebündelte Flammstrahl vermag nur ein relativ kleines Volumen der im Brennraum befindlichen Gemischmenge zu erfassen, was sich sowohl auf die Zündsicherheit als auch auf den Ablauf des Verbrennungsprozesses im Brennraum nachteilig auswirkt.

### Vorteile der Erfindung

Die erfindungsgemäße Anlage mit den kennzeichnenden Merkmalen des Patentanspruchs 1 hat demgegenüber den Vorteil, daß die Gemischaufbereitung im Brennraum verbessert wird, da das in den Brennraum mündende Kanalsystem für eine zusätzliche Durchmischung der Gase sorgt. Außerdem bewirkt das Kanalsystem, daß die von der Zündstelle ausgehende und den Gaszuführkanal durchlaufende Flammfront vor ihrem Eintritt in den Brennraum in mehrere Flammstrahlen aufgespalten wird, die an verschiedenen Stellen in den Brennraum eintreten und ein relativ großes Gemischvolumen gleichzeitig entzünden. Dadurch wird die Zündsicherheit verbessert und die Verbrennung optimiert.

Durch die in den Unteransprüchen aufgeführten Maßnahmen sind vorteilhafte Weiterbildungen und Verbesserungen der im Patentanspruch 1 angegebenen Anlage möglich. Besonders vorteilhaft ist es, das in den Brennraum mündende Kanalsystem in bzw. an einem austauschbaren Einsatz aus hitzebeständigem Material auszubilden, der in einer Ausnehmung der Bearbeitungskammer gehalten ist. Solche Einsatzteile sind verhältnismäßig kleine, einfach herstellbare Bauelemente, deren Austausch als hoch beanspruchte Verschleißteile mit geringen Kosten möglich ist. Eine die Standzeit des Mischblocks günstig beeinflussende Maßnahme besteht ferner darin, daß die dem Brennraum zugekehrte Stirnfläche des Einsatzes einen Überstand gegenüber der die Ausnehmung für den Einsatz aufweisenden Wandfläche der Bearbeitungskammer hat, und daß das sich an den Gaszuführkanal anschließende Kanalsystem im Bereich dieses Überstandes in den Brennraum mündet. Dadurch ist es möglich, die Kanäle des Kanalsystems so anzuordnen, daß sie an der Umfangsfläche des Überstandes austreten. Die Stirnfläche des Einsatzes bleibt frei von Kanälen und wirkt als Prallfläche, die den Mischblock gegen die bei der Explosion des Gasgemisches auftretende Druck- und Hitzewelle schützt.

### Zeichnung

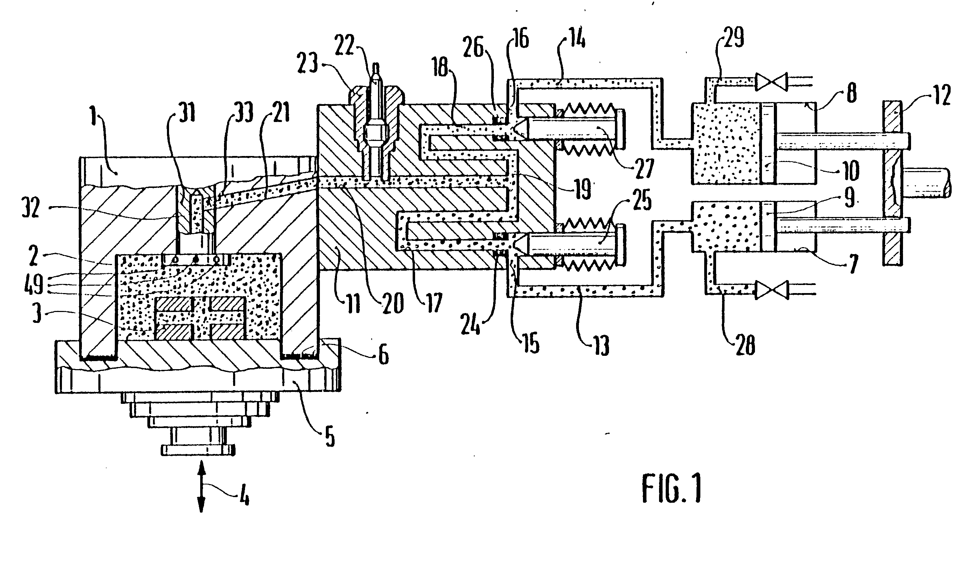

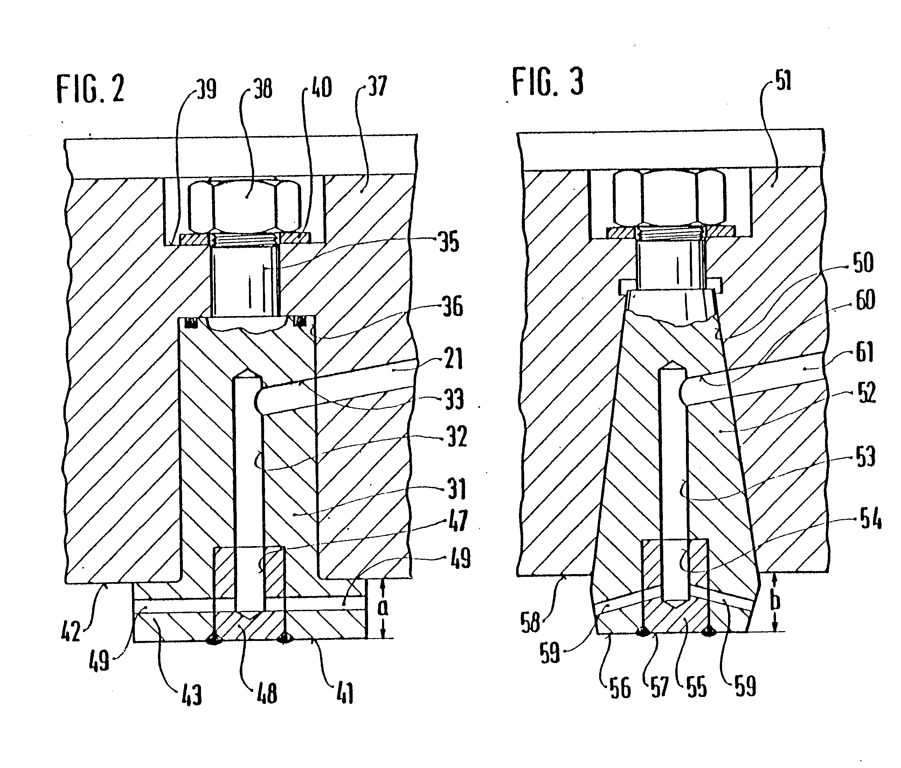

Ausführungsbeispiele der Erfindung sind in der Zeichnung dargestellt und in der nachfolgenden Beschreibung mit Angabe weiterer Vorteile näher erläutert. Es zeigen Figur 1 den schematischen Aufbau einer Anlage zum thermischen Entgraten von Werkstücken, Figuren 2 bis 5 jeweils einen Längsschnitt durch den Kopfteil einer Werkstück-Bearbeitungkammer mit verschiedenen Ausführungsformen eines der Gaszufuhr dienenden Kanalsystems.

### Beschreibung der Ausführungsbeispiele

In Figur 1 ist mit 1 eine Bearbeitungskammer bezeichnet, in deren Brennraum 2 sich ein zu entgratendes Werkstück 3 befindet. Das Werkstück 3 ruht auf einem in Richtung des Doppelpfeils 4 bewegbaren Schließteller 5, welcher vor dem Füllen des Brennraums mit einem Brenngas-Sauerstoffgemisch und Zünden desselben an die Stirnfläche der Bearbeitungskammer 1 angelegt wird und den Brennraum 2 druckdicht verschließt. Zwischen Teller 5 und Stirnfläche ist eine Dichtung 6 angeordnet.

Die Gaskomponenten des Brenngas-Sauerstoffgemisches werden über einen Dosierzylinder 7 für Brenngas bzw. einen Dosierzylinder 8 für Sauerstoff mittels je eines Gaseinstoßkolbens 9 bzw. 10 in einen Mischblock 11 eingebracht. Die Kolben 9, 10 sind durch ein Joch 12 miteinander gekoppelt, sodaß sie unter dem Einfluß einer am Joch angreifenden Kraft Hübe gleicher Größe ausführen.

Von den Dosierzylindern 7, 8 führt je eine druckfeste Leitung 13 bzw. 14 in den Mischblock 11, der aus einem massiven Metallblock besteht. Die Leitungen 13, 14 münden in je eine Anschlußbohrung 15 bzw. 16 im Mischblock 11, an die sich Bohrungen 17 bzw. 18 anschließen. Diese führen zu einer als Mischkammer dienenden Bohrung 19, von welcher eine Bohrung 20 abgeht, die das brennbare Gasgemisch über einen den Kopfteil der Bearbeitungskammer 1 durchquerenden Gaszuführkanal (Bohrung 21) in den Brennraum 2 der Kammer leitet. Zum Zünden des Gemisches dient eine in die Bohrung 20 hineinragende Zündkerze 22, die in einem Einsatz 23 des Mischblocks 11 sitzt. Zwischen den Bohrungen 15, 17 und 16, 18 befindet sich je ein Ventil 24, 25 bzw. 26, 27. Diese Ventile werden am Beginn des Gaseinstoßvorgangs geöffnet und nach Abschluß des Gaseinstoßes, wenn die Kolben 9, 10 ihre Endstellung erreicht haben und sich kein Gas mehr in den Zylindern 7, 8 befindet, wieder geschlossen.

Bei der Inbetriebnahme der Anlage werden zunächst Brenngas und Sauerstoff über Leitungen 28, 29 mit einem Druck von beispielsweise 5 bar in die Zylinder 7, 8 eingelassen. Nachdem die Zylinder gefüllt sind schieben die Einstoßkolben 9, 10 die Gaskomponenten über den Mischblock 11 in den Brennraum 2 der geschlossenen Bearbeitungskammer 1 und verdichten sie dort zu dem sogenannten Kammerfülldruck. Dieser kann je nach Art des verwendeten Brenngases und des Werkstoffes der zu bearbeitenden Werkstücke bis zu 50 bar betragen. In der Bohrung 19 des Mischblocks werden beide Gase miteinander vermischt und nach dem Füllvorgang mittels der Zündkerze 22 gezündet. Die Flammfront schreitet dann über die Bohrung 21 in den Brennraum 2 fort. Bei der Explosion treten im Brennraum kurzzeitig Drücke bis zu 1 000 bar und Temperaturen in der Größenordnung von 3 500 °C auf.

In einer zentrischen Ausnehmung des Kopfteils des Bearbeitungskammer 1 sitzt ein austauschbarer Einsatz 31 aus hitzebeständigem Werkstoff, der in Figur 1 als zylindrischer Körper ausgebildet ist und nachstehend Kammerbolzen genannt wird. Der Bolzen 31 hat eine als Sacklochbohrung ausgebildete Vertikalbohrung 32, die über eine weitere, im Bolzen ausgebildete Schrägbohrung 33 mit der im Kopfteil verlaufenden Bohrung 21 in Verbindung steht. Die das Endstück des Gaszuführkanals bildende Bohrung 32 mündet nicht direkt in Brennraum 2, sondern geht vor ihrer Einmündung in den Brennraum in ein System aus mehreren Kanälen über, die, als Bohrungen 49 ausgebildet, an verschiedenen Stellen in den Brennraum münden. Durch dieses Kanalsystem strömt das im Mischblock erzeugte Gasgemisch auf verschiedenen Wegen mit unterschiedlicher Richtung in den Brennraum, wobei die verschiedenen Strömungen eine Verwirbelung und zusätzliche Durchmischung der Gase erzeugen. Das Kanalsystem erbringt außerdem den Effekt einer Mehrfachzündung, da die nach dem Zünden des Gasgemisches von der Zündstelle 22 durch die Bohrungen 20, 21, 33, 32 fortschreitende Flammfront in Form mehrerer Flammstrahlen an verschiedenen Stellen in die Brennkammer eintritt, so daß das in ihr befindliche Gasgemisch an mehreren Orten gleichzeitig entzündet wird. Dadurch wird sowohl die Zündsicherheit als auch der Ablauf des Verbrennungsprozesses verbessert.

Einzelheiten des Kammerbolzens 31 sind in Figur 2 gezeigt. Wie aus dieser Figur ersichtlich, hat der Bolzen 31 einen Gewindefortsatz 35 und ist in einer als Paßsitz ausgebildeten Stufenbohrung 36 des Kopfteils 37 der Werkstückbearbeitungskammer 1 angeordnet. Zum Festhalten des Bolzens 31 in der Bohrung dient eine Mutter 38, die auf den Gewindefortsatz 35 aufgeschraubt ist. Zwischen Mutter 38 und einer Fläche 39 des Kopfteils befindet sich eine Unterlegscheibe 40. Die dem Brennraum zugekehrte Stirnfläche des Bolzens 31 hat einen Überstand a gegenüber der Decke 42 des Brennraums. Im Bereich dieses Überstandes hat der Bolzen einen größeren Durchmesser. Der dadurch gebildete scheibenförmige Fortsatz 43 liegt an der Decke 42 des Brennraums an.

An die zentrische Vertikalbohrung 32 schließt sich eine koaxiale Sacklochbohrung 47 an, die in einem mit der Stirnfläche 41 des Bolzens 31 abschließenden und mit dem Bolzen verschweißten Einsatz 48 ausgebildet ist.

Von der Sacklochbohrung 47 gehen mehrere, beispielsweise vier, Radialbohrungen 49 ab, die am Umfang des Fortsatzes 43 austreten und parallel zur Decke 42 verlaufen. Diese Bohrungen bilden ein Kanalsystem, durch welches das Gasgemisch und nachfolgend die das Gemisch entzündenden Flammstrahlen in den Brennraum eintreten, mit den bereits geschilderten Wirkungen hinsichtlich Durchmischung und Verbrennung.

Das Ausführungsbeispiel nach Figur 3 unterscheidet sich von demjenigen gemäß Figur 2 durch die Form des Kammerbolzens und den Verlauf des Kanalsystems. Der in einem Paßsitz 50 des Kopfteils 51 einer Bearbeitungskammer angeordnete Bolzen 52 hat konische Form mit in Richtung des Explosionsdrucks abnehmendem Durchmesser. Die Befestigung des Bolzens im Kopfteil 51 ist identisch mit derjenigen des Bolzens 31 von Figur 2. Der Bolzen hat eine zentrische, als Sacklochbohrung ausgeführte Vertikalbohrung 53, die in eine Sacklochbohrung 54 übergeht, welche in einem mit dem Bolzen 52 verschweißten Einsatz 55 ausgebildet ist. Die in einer Ebene liegenden Stirnflächen 56, 57 des Bolzens 52 und des Einsatzes 55 haben einen Überstand b gegenüber der Decke 58 des Brennraums. Im Bereich dieses Überstandes gehen von der Sacklochbohrung 54 mehrere Radialbohrungen 59 ab, die in den Brennraum münden. Im Gegensatz zu den Bohrungen 49 von Figur 2 sind die Radialbohrungen 59 schräg nach unten gerichtet, wodurch die aus den Bohrungen austretenden Flammstrahlen ein großes Volumen des im Brennraum befindlichen Gasgemisches erfassen. Eine in die Vertikalbohrung 53 mündende Schrägbohrung im Bolzen 52 ist mit 60 und eine sich daran anschließende Bohrung im Kopfteil 51 mit 61 bezeichnet.

Die dem Brennraum zugekehrten Stirnflächen der Kammerbolzen und der Einsätze wirken als Prallflächen, welche die bei der Explosion des Gasgemisches im Brennraum auftretende Druck- und Flammfront zum Teil absorbiert und zum Teil so umlenkt, daß vor allem der Mischblock gegen Flammrückschlag geschützt ist. Die Ausführungsform nach Figur 3 erbringt überdies den Vorteil, daß der Kammerbolzen beim Entgratvorgang durch den Explosionsdruck mit seiner Mantelfläche gegen die Fläche des Paßsitzes 50 gepreßt wird, wodurch ohne besondere, zusätzliche Dichtmittel eine großflächige Abdichtung des Bolzens gegenüber dem Kopfteil 51 entsteht.

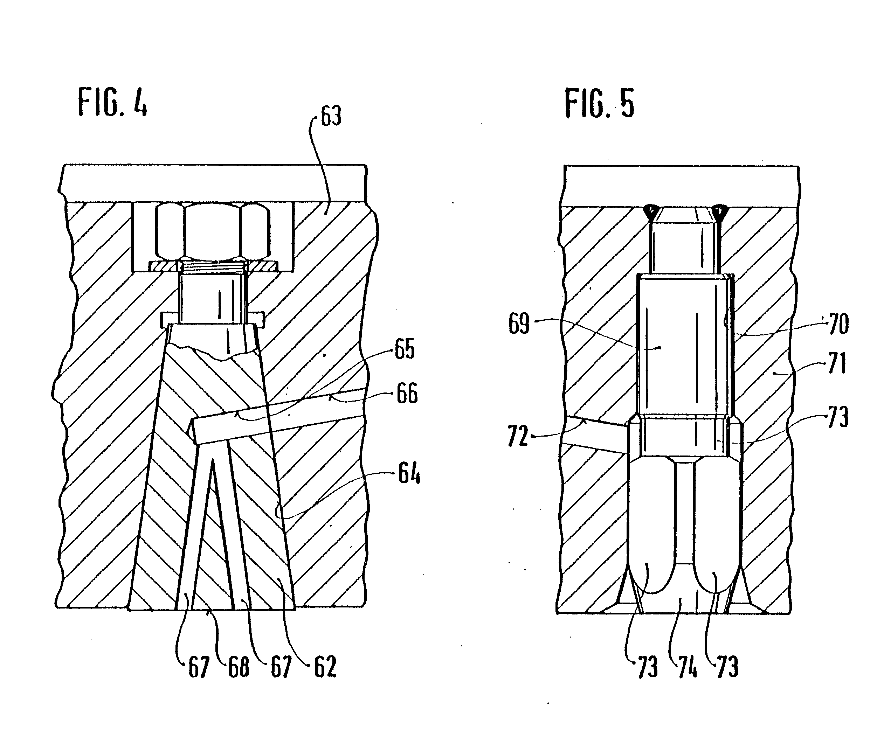

Die Figuren 4 und 5 zeigen zwei Ausführungsformen von Kammerbolzen, die sich insbesondere durch einfache Herstellbarkeit auszeichnen.

Der in Figur 4 dargestellte Bolzen 62 entspricht von der Form her im wesentlichen demjenigen des Ausführungsbeispiels nach Figur 3. Der im Kopfteil 63 einer Bearbeitungskammer ausgeformte Paßsitz für den Bolzen ist mit 64 bezeichnet. Die Mittel zum Festhalten des Bolzens im Paßsitz 64 sind die gleichen wie in den Figuren 2 und 3. Der Bolzen 62 ist mit einer schrägen Sacklochbohrung 65 versehen, an die sich eine im Kopfteil 63 ausgebildete, zu einem nicht dargestellten Mischblock führende Bohrung 66 anschließt. Von der Sacklochbohrung 65 gehen mehrere, schräg nach unten gerichtete Bohrungen ab, die spitzwinkelig zueinander verlaufen und im Bereich der Stirnfläche 68 des Bolzens 62 in den Brennraum der Bearbeitungskammer münden.

Figur 5 zeigt einen Kammerbolzen 69 von zylindrischer Grundform, welcher in einer Stufenbohrung 70 des Kopfteils 71 einer Bearbeitungskammer angeordnet und mit dem Kopfteil verschweißt ist. Der Kammerbolzen 69 ist in demjenigen Bereich, in welchem eine den Kopfteil 71 durchquerende Gaszuführungsbohrung 72 in die Stufenbohrung 70 mündet, mit einer Ringnut 73 versehen, die zusammen mit der Bohrungswand einen Ringkanal bildet. Zwischen der Außenkontur des Bolzens 69 und der Bohrung 70 sind Freisparungen vorgesehen, die sich vom Ringkanal bis zu dem dem Brennraum zugekehrten Ende des Bolzens erstrecken. Diese, das Kanalsystem bildenden Freisparungen bestehen im Ausführungsbeispiel aus mehreren, am Umfang des Bolzens 69 ausgebildeten Abflachungen 73. Anstelle von Abflachungen könnten in den Bolzen und/oder in die Bohrungswand als Freisparungen auch Nuten oder ähnliche Vertiefungen eingefräst sein. Die Bohrung 70 ist an ihrem dem Brennraum zugekehrten Ende aufgeweitet und der Bolzen 69 im Bereich der Aufweitung als Kegelstumpf 74 ausgebildet, um den Gaseinlaß zu vergrößern.

## Patentansprüche

1. Anlage zur Behandlung von Werkstücken mit einem explosiven Gasgemisch, insbesondere thermische Entgratanlage, mit einer Bearbeitungskammer (1), die einen Brennraum (2) zur Aufnahme der Werkstücke (3) enthält, wobei an die Bearbeitungskammer ein Mischblock (11) zur Vermischung der Gaskomponenten und Zündung des Gasgemisches über einen vorzugsweise den Kopfteil der Kammer durchquerenden Gaszuführkanal (21, 32, 33, 47 bzw. 53, 54, 60, 61 bzw. 65, 66 bzw. 72, 73) angeschlossen ist, dadurch gekennzeichnet, daß der Gaszuführkanal vor seiner Einmündung in den Brennraum in ein System aus mehreren Kanälen (49 bzw. 59 bzw. 67 bzw. 73) übergeht, die an verschiedenen Stellen in den Brennraum münden.

2. Anlage nach Anspruch 1, dadurch gekennzeichnet, daß das in den Brennraum (2) mündende Kanalsystem (49 bzw. 59 bzw. 67 bzw. 73) in bzw. an einem austauschbaren Einsatz (31 bzw. 52 bzw. 62 bzw. 69) aus hitzebeständigen Material ausgebildet ist, der in einer Ausnehmung (36 bzw. 50 bzw. 64 bzw. 70) der Bearbeitungskammer (1) gehalten ist.

3. Anlage nach Anspruch 2, dadurch gekennzeichnet, daß die dem Brennraum (2) zugekehrte Stirnfläche (41 bzw. 56, 57) des Einsatzes (31 bzw. 52) einen Überstand (a bzw. b) gegenüber dem die Ausnehmung (36 bzw. 50) für den Einsatz aufweisenden Wandfläche (42 bzw. 58) der Bearbeitungskammer (1) hat, und daß das sich an den Gaszuführkanal (21, 32, 33, 47 bzw. 53, 54, 60, 61) anschließende Kanalsystem (49 bzw. 59) im Bereich dieses Überstandes in den Brennraum mündet.

4. Anlage nach Anspruch 2, dadurch gekennzeichnet, daß das Kanalsystem (49 bzw. 59 bzw. 67) aus in dem Einsatz (31 bzw. 52 bzw. 62) ausgebildeten Bohrungen besteht.

5. Anlage nach den Ansprüchen 3 und 4, dadurch gekennzeichnet, daß als Endstück des Gaszuführkanals eine im Einsatz (31 bzw. 52) ausgebildete Zentralbohrung (32, 47 bzw. 53, 54) dient, und daß die in den Brennraum (2) mündenden Bohrungen des Kanalsystems (49 bzw. 59) radial von der Zentralbohrung abgehend am Umfang des Einsatzes austreten.

6. Anlage nach Anspruch 5, dadurch gekennzeichnet, daß der Einsatz (31 bzw. 52) in einer im Kopfteil (37 bzw. 51) der Bearbeitungskammer (1) ausgebildeten Ausnehmung (36 bzw. 50) sitzt und die in den Brennraum (2) mündenden Bohrungen (49 bzw. 59) des Kanalsystems parallel zur Decke (42 bzw. 58) des Brennraums verlaufen.

7. Anlage nach Anspruch 5, dadurch gekennzeichnet, daß der Einsatz (52) in einer im Kopfteil (51) der Bearbeitungskammer ausgebildeten Ausnehmung (50) sitzt und die in den Brennraum (2) mündenden Bohrungen (59) schräg nach unten verlaufen.

8. Anlage nach Anspruch 4, dadurch gekennzeichnet, daß der Einsatz (62) in einer im Kopfteil (63) der Bearbeitungskammer ausgebildeten Ausnehmung (64) angeordnet ist und die Bohrungen (67) an der dem Brennraum (2) zugekehrten Stirnfläche (68) des Einsatzes austreten.

9. Anlage nach Anspruch 2 oder 3, dadurch gekennzeichnet, daß das Kanalsystem durch zwischen der Außenkontur des Einsatzes (69) und der zur Aufnahme des Einsatzes dienenden Ausnehmung (70) angebrachten Freisparungen (73) gebildet wird.

10. Anlage nach einem der Ansprüche 2 bis 9, dadurch gekennzeichnet, daß als Einsatz (31 bzw. 52 bzw. 62 bzw. 69) ein rotationssymmetrischer Körper dient und die in der Bearbeitungskammer (1) vorgesehene Ausnehmung (36 bzw. 50 bzw. 64 bzw. 70) als Paßsitz für den Körper ausgebildet ist.

## Claims

1. Installation for treating work pieces with an explosive gas mixture, in particular a thermal deburring machine, comprising a treatment chamber (1) which contains a combustion chamber (2) for accommodating the parts (3) wherein a mixing block (11) for mixing the gas components and igniting the gas mixture via a gas-supply channel (21, 32, 33, 47 or 53, 54, 60, 61 or 65, 66 or 72, 73) preferably crossing the head part of the chamber is connected to the treatment chamber, characterized in that the gas-supply channel, before it leads into the combustion chamber, merges into a system consisting of a plurality of channels (49 or 59 or 67 or 73) which lead into the combustion chamber at various points.

2. Installation according to claim 1, characterized in that the channel system (49 or 59 or 67 or 73) leading into the combustion chamber (2) is formed in or on an exchangeable insert (31 or 52 or 62 or 69) which is made of a heat-resistant material and is held in a recess (36 or 50 or 64 or 70) in the treatment chamber (1).

3. Installation according to claim 2, characterized in that the end face (41 or 56, 57) of the insert (31 or 52) facing the combustion chamber (2) has a projecting length (a or b) relative to the wall surface (42 or 48) of the treatment chamber (1) having the recess (36 or 50) for the insert, and that the channel system (49 or 59) adjoining the gas-supply channel (21, 32, 33, 47 or 53, 54, 60, 61) leads into the combustion chamber in area of this projecting length.

4. Installation according to claim 2, characterized in that the channel system (49 or 59 or 67) consists of bores formed in the insert (31 or 52 or 62).

5. Installation according to claims 3 and 4, characterized in that a central bore (32, 47 or 53, 54) formed in the insert (31 or 32) serves as end piece of the gas-supply channel, and in that the bores of the channel system (49 or 59) which lead into the combustion chamber (2), branch off radially from the central bore to emerge at the periphery of the insert.

6. Installation according to claim 5, characterized in that the insert (31 or 52) sits in a recess (36 or 50) formed in the head part (37 or 51) of the treatment chamber (1), and the bores (49 or 59) of the channel system which lead into the combustion chamber (2) run parallel to the roof (42 or 58) of the combustion chamber.

7. Installation according to claim 5, characterized in that the insert (52) sits in a recess (50) formed in the head part (51) of the treatment chamber, and the bores (59) leading into the combustion chamber (2) run obliquely downwards.

8. Installation according to claim 4, characterized in that the insert (62) is arranged in a recess (64) formed in the head part (63) of the treatment chamber, and the bores (67) emerge at the end face (68) of the insert facing the combustion chamber (2).

9. Installation according to claim 2 or 3, characterized in that. the channel system is formed by clearance portions (73) located between the outer contour of the insert (69) and the recess (70) serving to accommodate the insert.

10. Installation according to one of the Claims 2 to 9, characterized in that a rotationally symetric body serves as insert (31 or 52 or 62 or 69), and the recess (36 or 50 or 64 or 70) provided in the treatment chamber (1) is formed as mating seat for the body.

## Revendications

1. Installation de traitement de pièces par un mélange de gaz explosif, en particulier une installation d'ébarbage thermique, comportant une enceinte de traitement (1) qui contient une chambre de combustion (2) pour la réception des pièces, où un bloc de mélange (11) pour mélanger les composants gazeux et allumer le mélange gazeux, est relié à l'enceinte de traitement (1) par une canalisation (21, 32, 33, 47 ou 53, 54, 60, 61 ou 65, 66 ou 72, 73) traversant la partie de tête de la chambre, caractérisée en ce que la canalisation d'amenée des gaz se transforme avant son débouché dans la chambre de combustion en un système de plusieurs canalisations (49 et 59, 67, 73) qui débouchent en différents points dans la chambre de combustion.

2. Installation selon la revendication 1, caractérisée en ce que le système de canalisations (49 et 59, 62 et 73) débouchant dans la chambre de combustion (2) est formé dans une pièce d'insertion (31 ou 52 ou 62 ou 69) en matériau réfractaire qui est maintenu dans une cavité (36 ou 50 ou 64 ou 70) de l'enceinte de traitement (1).

3. Installation selon la revendication 2, caractérisée en ce que la surface frontale (41 ou 56, 57) de la pièce d'insertion (31 ou 52) faisant face à la chambre de combustion 2 possède un prolongement (a ou b) à l'opposé de la surface de paroi (42 ou 58) de l'enceinte de traitement comportant la cavité (36 ou 50) pour la pièce d'insertion et que le système de canalisation (49 ou 59) se raccordant à la canalisation d'amenée de gaz (21, 32, 33, 47 ou 53, 54, 60, 61) débouche dans la zone de ce prolongement dans la chambre de combustion.

4. Installation selon la revendication 2, caractérisée en ce que le système de canalisations (49 ou 59 ou 67) est constitué d'alésages pratiqués dans la pièce d'insertion (31 ou 52 ou 62).

5. Installation selon les revendications 3 et 4, caractérisée en ce qu'un alésage central (37, 47 ou 53, 54) pratiqué dans la pièce d'insertion (31 ou 52) sert comme embout de la canalisation d'amenée des gaz et que les alésages du système de canalisations (49 ou 59) débouchant dans la chambre de combustion (2) sortent radialement en divergeant à la périphérie de la pièce d'insertion.

6. Installation selon la revendication 5, caractérisée en ce que la pièce d'insertion (31 ou 52) se loge dans une cavité (36 ou 50) pratiquée dans la partie de tête (37 ou 51) de l'enceinte de traitement (1) et les alésages (49, 59) du système de canalisations débouchant dans la chambre de combustion (2) s'étendent parallèlement au couvercle (42 ou 58) de la chambre de combustion.

7. Installation selon la revendication 5, caractérisée en ce que la pièce d'insertion (52) se loge dans une cavité (50) pratiquée dans la partie de tête (51) de l'enceinte de traitement (1) et les alésages (59) débouchant dans la chambre de combustion s'étendent obliquement vers le bas.

8. Installation selon la revendication 4, caractérisée en ce que la pièce d'insertion (62) est placée dans une cavité (64) pratiquée dans la partie de tête (63) de l'enceinte de traitement, et les alésages (67) divergent sur les surfaces frontales (68) faisant face à la chambre de combustion (2).

9. Installation selon la revendication 2 ou 3, caractérisée en ce que le système de canalisations est formé par les évidements (73) pratiqués entre le contour extérieur de la pièce d'insertion (69) et la cavité servant à la réception de cette même pièce d'insertion.

10. Installation selon l'une des revendications 2 à 9, caractérisée en ce qu'un corps à symétrie de rotation sert de pièce d'insertion (31 ou 52 ou 62 ou 69) et la cavité (36 ou 50 ou 64 ou 70) prévue dans l'enceinte de traitement (1) est sous forme d'un ajustement serré pour ce corps.

FIG.1

FIG. 2

FIG. 3

EP 0 211 848 B1

FIG. 4

63

65

66

64

67  68  67  62

FIG. 5

69

70

71

72

73

73  74  73

EP 0 211 848 B1